# EUROPEAN PATENT APPLICATION

(11) **EP 4 712 573 A1**
(43) Date of publication of application: **18.03.2026**
(21) Application number: 23936003.5
(22) Date of filing: 08.05.2023
(51) Int. Cl.: H04W 48/08, H04W 72/512

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/092849
(87) International publication number: WO 2024/229675

(57) **Abstract**

Provided in the embodiments of the present disclosure are an information transmission method and apparatus, a communication device, and a storage medium. A network device executes sending in a cell first indication information to a user equipment (UE), wherein the first indication information is used for indicating that the cell allows or forbids camping of a first type of UEs, and the first type of UEs do not support a network energy saving (NES) capability.

## Description

### TECHNICAL FIELD

The present disclosure relates to, but is not limited to, the technical field of wireless communication, and in particular to, an information transmission method and apparatus, a communication device and a storage medium.

### BACKGROUND

The main application scenarios of fifth-generation (5G) mobile communication technology include: an enhanced mobile broadband (eMBB), ultra-reliable and low-latency communications (URLLC), and a massive machine-type communication (mMTC). The eMBB aims to enable users to access multimedia content, services, and data, and demand for it is growing rapidly. Typical applications of URLLC include: industrial automation, power automation, remote medical operations (surgery), and traffic safety. Typical characteristics of the mMTC include: high connection density, small data volumes, latency-insensitive services, low module costs, and long lifespans.

### SUMMARY

Embodiments of the present disclosure provide an information transmission method and apparatus, a communication device, and a storage medium.

In a first aspect of the embodiments of the present disclosure, there is provided an information transmission method, which is performed by a network device and includes:
sending first indication information to a user equipment (UE) in a cell, where the first indication information is used to indicate that the cell allows or bars camping of a first type of UE, and the first type of UE does not support a network energy saving (NES) capability.

In one embodiment, the method further comprises:
sending second indication information to the UE in the cell, where the second indication information is used to indicate that the cell allows or bars camping of a second type of UE, and the second type of UE supports the network energy saving (NES) capability.

In one embodiment, the first indication information is carried in a Master Information Block (MIB).

The second indication information is carried in at least one of the following: the MIB and a System Information Block (SIB) 1.

In one embodiment, the method further comprises:
receiving UE capability indication information sent by the UE, where the UE capability indication information is used to indicate whether the UE supports the NES capability.

In one embodiment, the method further comprises:
determining whether to allow the UE to access or bar the UE from accessing the cell based on the UE capability indication information and based on whether the cell has the NES capability.

In one embodiment, determining whether to allow the UE to access or bar the UE from accessing based on the UE capability indication information and whether the cell has the NES capability includes:
determining that the UE does not support the NES capability and the cell has the NES capability, and barring the UE from accessing the cell.

In one embodiment, the method further comprises:
sending access rejection indication information to the UE, where the access rejection indication information indicates that the cell bars the UE from accessing.

In one embodiment, the UE capability indication information is carried in at least one of the following: a message 1 (Msg1), a message 3 (Msg3), and a message 5 (Msg5).

The access rejection indication information is carried in at least one of the following: a radio resource control (RRC) rejection message and an RRC release message.

In one embodiment, a cell having the network energy saving (NES) capability is located in a frequency band with a predetermined frequency band camping priority.

In one embodiment, a cell having the network energy saving (NES) capability is a cell with a predetermined cell camping priority.

In one embodiment, the method further comprises:
sending cell capability indication information to the UE in the cell, where the cell capability indication information is used to indicate at least one of the following:
whether the cell has the NES capability; and
whether at least one neighboring cell of the cell has NES capability.

In a second aspect of the embodiments of the present disclosure, there is provided an information transmission method, which is performed by a user equipment (UE) and includes:
receiving first indication information sent by a network device in a cell, where the first indication information is used to indicate that the cell allows or bars camping of a first type of UE, and the first type of UE does not support a network energy saving (NES) capability.

In one embodiment, the method further comprises:
receiving second indication information sent by the network device in the cell, where the second indication information is used by the UE to determine whether the cell allows or bars camping of a second type of UE based on the first indication information and/or the second indication information, and the second type of UE supports the network energy saving (NES) capability.

In one embodiment, the second indication information being used by the UE to determine whether the cell allows or bars the camping of the second type of UE based on the first indication information and the second indication information, includes at least one of the following:
in response to that the first indication information is a first value and the second indication information is a second value, determining that the cell bars the camping of the second type of UE;
in response to that the first indication information is a first value and the second indication information is a third value, determining that the cell allows the camping of the second type of UE;
in response to that the first indication information is a fourth value and the second indication information is any value, determining that the cell allows the camping of the second type of UE.

In one embodiment, in response to that the first indication information is a fourth value, the first indication information indicates that the cell allows the camping of the second type of UE.

In one embodiment, in response to that the first indication information is a first value, the first indication information indicates that the cell bars the camping of the first type of UE.

In one embodiment, the first indication information is carried in a master information block (MIB); and/or,
the second indication information is carried in at least one of the following: the MIB and a system information block 1 (SIB1).

In one embodiment, the method further comprises:
sending UE capability indication information to the network device, where the UE capability indication information is used to indicate whether the UE supports the NES capability.

In one embodiment, the UE capability indication information is used by the network device to determine whether to allow the UE to access or bar the UE from accessing the cell in combination with whether the cell has the NES capability.

In one embodiment, the method further comprises:
receiving access rejection indication information sent by the network device, where the access rejection indication information indicates that the cell bars the UE from accessing.

In one embodiment, the UE capability indication information is carried in at least one of the following: a message 1 (Msg1), a message 3 (Msg3), and a message 5 (Msg5).

The access rejection indication information is carried in at least one of the following: an RRC rejection message and an RRC release message.

In one embodiment, the method further comprises:
in response to receiving the access rejection indication information, sending third indication information from a lower layer of the UE to an upper layer of the UE, where the third indication information is used to indicate at least one of the following:
the cell bars access by all access categories; and
the cell bars access by other access categories except an access category 0 and an access category 2.

In one embodiment, the method further comprises:
receiving cell capability indication information sent by the network device in the cell, where the cell capability indication information is used to indicate at least one of the following:
whether the cell has the NES capability; and
whether at least one neighboring cell of the cell has the NES capability.

In one embodiment, the method further comprises:
selecting a cell to camp on at least based on the cell capability indication information.

In one embodiment, selecting the cell to camp on at least based on the cell capability indication information includes:
selecting the cell to camp on based on at least one of the following:
a frequency band camping priority of the frequency band where the cell is located; and
a cell camping priority of the cell;
where the cell having the NES capability is located in a frequency band with a predetermined frequency band camping priority, and the cell having the NES capability is a cell with a predetermined cell camping priority.

In a third aspect of the embodiments of the present disclosure, there is provided an information transmission apparatus, which is provided in a network device and includes:
a transceiver module, configured to send first indication information to a user equipment (UE) in a cell, where the first indication information is used to indicate that the cell allows or bars camping of a first type of UE, and the first type of UE does not support a network energy saving (NES) capability.

In one embodiment, the transceiver module is further configured to:
send second indication information to the UE in the cell, where the second indication information is used to indicate that the cell allows or bars camping of a second type of UE, and the second type of UE supports the network energy saving (NES) capability.

In one embodiment, the first indication information is carried in a master information block (MIB).

The second indication information is carried in at least one of the following: the MIB and a system information block 1 (SIB1).

In one embodiment, the transceiver module is further configured to:
receive UE capability indication information sent by the UE, where the UE capability indication information is used to indicate whether the UE supports the NES capability.

In one embodiment, the apparatus further comprises:
a processing module, configured to determine whether to allow the UE to access or bar the UE from accessing the cell based on the UE capability indication information and whether the cell has the NES capability.

In one embodiment, determining whether to allow the UE to access or bar the UE from accessing based on the UE capability indication information and whether the cell has the NES capability includes:
determining that the UE does not support the NES capability and the cell has the NES capability, and barring the UE from accessing the cell.

In one embodiment, the transceiver module is further configured to:
send access rejection indication information to the UE, where the access rejection indication information indicates that the cell bars the UE from accessing.

In one embodiment, the UE capability indication information is carried in at least one of the following: a message 1 (Msg1), a message 3 (Msg3), and a message 5 (Msg5).

The access rejection indication information is carried in at least one of the following: an RRC rejection message and an RRC release message.

In one embodiment, a cell having the network energy saving (NES) capability is located in a frequency band with a predetermined frequency band camping priority.

In one embodiment, the cell having the network energy saving (NES) capability is a cell with a predetermined cell camping priority.

In one embodiment, the transceiver module is further configured to:
send cell capability indication information to the UE in the cell, where the cell capability indication information is used to indicate at least one of the following:
whether the cell has the NES capability; and
whether at least one neighboring cell of the cell has NES capability.

In a fourth aspect of the embodiments of the present disclosure, there is provided an information transmission device, which is provided in a user equipment (UE) and includes:
a transceiver module, configured to receive first indication information sent by a network device in a cell, where the first indication information is used to indicate that the cell allows or bars camping of a first type of UE, and the first type of UE does not support a network energy saving (NES) capability.

In one embodiment, the transceiver module is further configured to:
receive second indication information sent by the network device in the cell, where the second indication information is used by the UE to determine whether the cell allows or bars camping of a second type of UE based on the first indication information and/or the second indication information, and the second type of UE supports the network energy saving (NES) capability.

In one embodiment, the second indication information being used by the UE to determine whether the cell allows or bars the camping of the second type of UE based on the first indication information and the second indication information, includes at least one of the following:
in response to that the first indication information is a first value and the second indication information is a second value, determining that the cell bars the camping of the second type of UE;
in response to that the first indication information is a first value and the second indication information is a third value, determining that the cell allows the camping of the second type of UE;
in response to that the first indication information is a fourth value and the second indication information is any value, determining that the cell allows the camping of the second type of UE.

In one embodiment, in response to that the first indication information is the fourth value, the first indication information indicates that the cell allows the camping of the second type of UE.

In one embodiment, in response to that the first indication information is a first value, the first indication information indicates that the cell bars the camping of the first type of UE.

In one embodiment, the first indication information is carried in a master information block (MIB); and/or,
the second indication information is carried in at least one of the following: the MIB and a system information block 1 (SIB1).

In one embodiment, the transceiver module is further configured to:
send UE capability indication information to the network device, where the UE capability indication information is used to indicate whether the UE supports the NES capability.

In one embodiment, the UE capability indication information is used by the network device to determine whether to allow the UE to access or bar the UE from accessing the cell in combination with whether the cell has the NES capability.

In one embodiment, the transceiver module is further configured to:
receive access rejection indication information sent by the network device, where the access rejection indication information indicates that the cell bars the UE from accessing.

In one embodiment, the UE capability indication information is carried in at least one of the following: a message 1 (Msg1), a message 3 (Msg3), and a message 5 (Msg5).

The access rejection indication information is carried in at least one of the following: an RRC rejection message and an RRC release message.

In one embodiment, the transceiver module is further configured to:
in response to receiving the access rejection indication information, send third indication information from a lower layer of the UE to an upper layer of the UE, where the third indication information is used to indicate at least one of the following:
the cell bars access by all access categories; and
the cell bars access by other access categories except an access category 0 and an access category 2.

In one embodiment, the transceiver module is further configured to:
receive cell capability indication information sent by the network device in the cell, where the cell capability indication information is used to indicate at least one of the following:
whether the cell has the NES capability; and
whether at least one neighboring cell of the cell has the NES capability.

In one embodiment, the apparatus further comprises:
a processing module, configured to select a cell to camp on at least based on the cell capability indication information.

In one embodiment, the processing module is specifically configured to:
select the cell to camp on based on at least one of the following:
a frequency band camping priority of the frequency band where the cell is located; and
a cell camping priority of the cell;
where the cell having the NES capability is located in a frequency band with a predetermined frequency band camping priority, and the cell having the NES capability is a cell with a predetermined cell camping priority.

In a fifth aspect of the embodiments of the present disclosure, there is provided a communication system, including a network device and a user equipment (UE), where,
the network device executes the information transmission method provided by the first aspect; and
the UE executes the information transmission method provided by the second aspect.

In a sixth aspect of the embodiments of the present disclosure, a communication device is provided, including a processor, a transceiver, a memory, and an executable program stored in the memory and capable of being run by the processor, where the processor executes the information transmission method provided in the first aspect or the second aspect when running the executable program.

In a seventh aspect of the embodiments of the present disclosure, a computer storage medium is provided, where the computer storage medium stores an executable program, and the executable program, when being executed by a processor, can implement the information transmission method provided in the first aspect or the second aspect.

The embodiments of the present disclosure provide an information transmission method and apparatus, a communication device, and a storage medium. The network device executes sending first indication information to the UE in the cell, where the first indication information is used to indicate that the cell allows or bars camping of a first type of UE, and the first type of UE does not support the NES capability. By indicating that the cell allows or bars the camping of the first type of UE through the first indication information, on the one hand, indicating whether the UE is allowed or barred from camping on by category enhances the flexibility of indicating that the UE is allowed or barred from camping on. On the other hand, when the cell has the NES capability, the first type of UE is denied barred from camping on, thereby reducing the situation where the UE communication efficiency is reduced and the power consumption is increased when the cell is in a NES mode.

In the technical solution provided by the embodiments of the present disclosure, it should be understood that the foregoing general description and the following detailed description are exemplary and explanatory only and do not limit the embodiments of the present disclosure.

### BRIEF DESCRIPTION OF THE DRAWINGS

The accompanying drawings herein are incorporated into and constitute a part of the description, illustrate embodiments consistent with the present disclosure, and are used together with the description to explain the principles of the embodiments of the present disclosure.
FIG. 1 is a schematic structural diagram of a wireless communication system shown according to an exemplary embodiment;
FIG. 2 is a schematic flow chart of information transmission shown according to an exemplary embodiment;
FIG. 3 is a schematic flow chart of information transmission shown according to an exemplary embodiment;
FIG. 4 is a schematic flow chart of information transmission shown according to an exemplary embodiment;
FIG. 5 is a schematic flow chart of information transmission shown according to an exemplary embodiment;
FIG. 6 is a schematic flow chart of information transmission shown according to an exemplary embodiment;
FIG. 7 is a schematic flow chart of information transmission shown according to an exemplary embodiment;
FIG. 8 is a schematic flow chart of information transmission shown according to an exemplary embodiment;
FIG. 9 is a schematic flow chart of information transmission shown according to an exemplary embodiment;
FIG. 10 is a schematic flow chart of information transmission shown according to an exemplary embodiment;
FIG. 11 is a schematic flow chart of information transmission shown according to an exemplary embodiment;
FIG. 12 is a schematic flow chart of information transmission shown according to an exemplary embodiment;
FIG. 13 is a schematic flow chart of information transmission shown according to an exemplary embodiment;
FIG. 14 is a schematic flow chart of information transmission shown according to an exemplary embodiment;
FIG. 15 is a schematic flow chart of information transmission shown according to an exemplary embodiment;
FIG. 16 is a schematic flow chart of information transmission shown according to an exemplary embodiment;
FIG. 17 is a schematic flow chart of information transmission shown according to an exemplary embodiment;
FIG. 18 is a schematic flow chart of information transmission shown according to an exemplary embodiment;
FIG. 19 is a schematic structural diagram of an information transmission apparatus shown according to an exemplary embodiment;
FIG. 20 is a schematic structural diagram of an information transmission apparatus shown according to an exemplary embodiment;
FIG. 21 is a schematic structural diagram of a UE shown according to an exemplary embodiment; and
FIG. 22 is a schematic structural diagram of a communication device shown according to an exemplary embodiment.

### DETAILED DESCRIPTION

Exemplary embodiments will be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure.

Terms used in the embodiments of the present disclosure are used solely for the purpose of describing certain embodiments and are not intended to limit the embodiments of the present disclosure. The singular forms of "a/an", "said" and "the" used in the embodiments of the present disclosure are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, and such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "when..." or "while..." or "in response to determination".

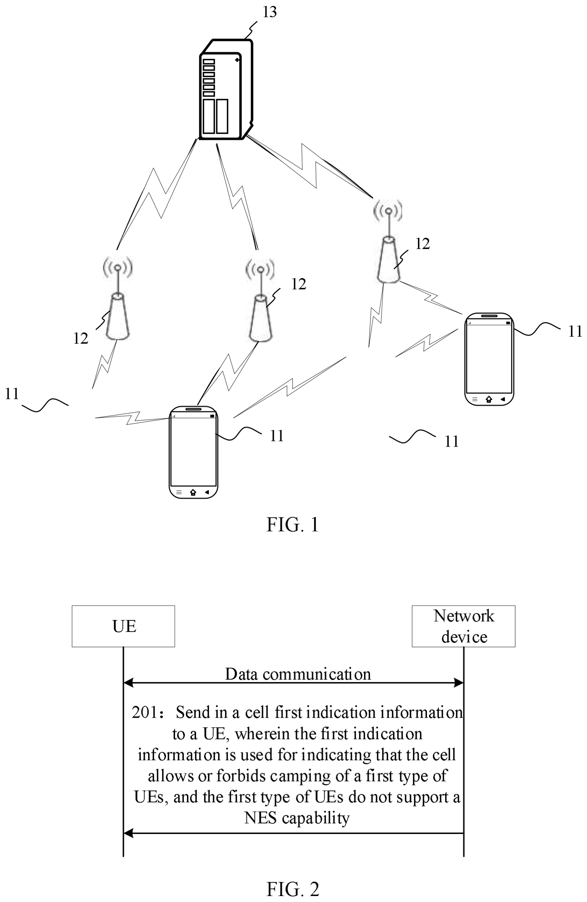

Referring to FIG. 1, a schematic structural diagram of a wireless communication system provided by an embodiment of the present disclosure is illustrated. As shown in FIG. 1, the wireless communication system is a communication system based on mobile communication technology, and the wireless communication system may include: several UEs 11 and network devices 12.

The wireless communication system may be a 4th mobile communication technology (4G) system, also known as a long term evolution (LTE) system; or, the wireless communication system may be a 5G system, also known as a new radio (NR) system or a 5G NR system. Alternatively, the wireless communication system may be a next generation system of the 5G system. The access network in the 5G system may be referred to as a new generation-radio access network (NG-RAN). Alternatively, it may be an MTC system.

UE 11 may refer to a device that provides voice and/or data connectivity to a user. UE 11 may communicate with one or more core networks via a Radio Access Network (RAN). UE 11 may be an IoT UE, such as a sensor device, a mobile phone (also known as a "cellular" phone), or a computer with an IoT UE. For example, the device may be an apparatus of fixed, portable, pocket-sized, handheld, built into a computer, or mounted in a vehicle, for example, terms such as a station (STA), a subscriber unit, a subscriber station, a mobile station, a mobile, a remote station, an access point, a remote terminal, an access terminal, a user terminal, a user agent, a user device, or a user equipment (UE). Or, UE 11may also be a device of an unmanned aerial vehicle. Alternatively, UE 11 may be a device mounted in a vehicle, such as a driving computer with wireless communication capabilities, or a wireless communication device connected to an external driving computer. Alternatively, the UE 11 may also be a roadside device, for example, a street lamp, a traffic light, or other roadside device with a wireless communication function.

The network device 12 may include an access network device. Optionally, the network device 12 may also include a core network device. The access network device may be an evolved access device (eNB) used in a 4G system. Alternatively, it may be an access device using a centralized distributed architecture (gNB) in a 5G system. When the access network device uses the centralized distributed architecture, it typically includes a central unit (CU) and at least two distributed units (DU). The central unit is provided with a protocol stack of the Packet Data Convergence Protocol (PDCP) layer, Radio Link Control (RLC) layer, and Media Access Control (MAC) layer; the distributed units are provided with a physical (PHY) layer protocol stack. The embodiments of the present disclosure do not limit the specific implementation of the access network device.

A wireless connection may be established between the network device 12 and the UE 11 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard of 5G.

In 3GPP standard release 18 (R18), the Network Energy Saving (NES) project was launched to reduce network energy consumption. The four NES functions supported by the standard are as follows:
- Reduced synchronization signal block secondary cell (SSB-less SCell)
- Cell discontinuous transmission/reception (cell DTX/DRX);
- Antenna port adaptation; and
- Physical Downlink Shared Channel (PDSCH) transmission power adaptation.

When the network enters an energy-saving mode, i.e., a NES mode, the cell periodically stops sending and/or receiving at certain intervals, i.e., the cell DTX/DRX, but the Master Information Block (MIB), System Information Block (Information Block (SIB), paging, and Random Access Channel (RACH) can be sent and received. That is, for base stations, R18 UEs, and legacy UEs, RACH in idle/inactive states, paging, and SIB are not affected by the NES mode.

The UE can obtain the Cell DTX/DRX configuration information configured on the network side. The UE works based on the Cell DTX/DRX configuration. The configuration information of the Cell DTX/DRX configuration information may include: a period, an offset and a duration (on duration), etc.

In the NES mode, the cell periodically stops sending and/or receiving at certain intervals. Therefore, the cell in the NES mode will affect the communication performance of the UE. To ensure the communication performance of the UE, legacy UEs or UEs without NES capabilities can be barred from camping on the cell in the NES mode. Even UEs with NES capabilities can be barred from camping on.

In the related art, a cell can only bar all UEs from camping on or accessing, for example, through a cellbarred field in the MIB. Therefore, how to bar UEs from camping on or accessing based on UE type is an urgent problem to be solved.

As shown in FIG. 2, an embodiment of the present disclosure provides an information transmission method, which is performed by a network device and includes the following steps.

In step 201, first indication information is sent to a UE in a cell, where the first indication information is used to indicate that the cell allows or bars camping of a first type of UE, and the first type of UE does not support a NES capability.

In one possible implementation, the network device may be an access network device or a core network device. Information transmission between the core network device and the UE may be implemented via the access network device.

Here, the first type of the UE may include at least one of the following:
a UE defined in earlier versions prior to 3GPP standard release 18 (R18), or referred to as a legacy UE; and
a UE that does not support the NES capability, for example, the UE in R18 version that does not support the network energy saving (NES) capability.

In a possible implementation, sending the first indication information to the user equipment (UE) in the cell may include:
determining that the cell has the NES capability, and sending the first indication information barring a first type of UE from camping to the UE.

In a possible implementation, the first indication information may be a "cellBarred" field in the MIB, and the "cellBarred" field may be used to indicate whether the first type of UE is allowed to camp on or barred from camping on.

In the cell with the NES capability, the cell periodically stops transmitting (generating/receiving) at certain intervals. Therefore, in NES mode, on the one hand, the cell can achieve energy-saving, and on the other hand, it will affect the communication efficiency of UEs. The first type of UEs, as they do not support NES capability, may conduct invalid communication during the periods when the cell stops transmission, thereby reducing communication efficiency and increasing power consumption.

In one possible implementation, the NES capability of a cell may include at least one of the following: a reduced synchronization signal block secondary cell (SSB-less SCell) capability; a cell discontinuous transmission/reception (cell DTX/DRX) capability; an antenna port adaptation capability; and a physical downlink shared channel transmission power adaptation capability.

In a possible implementation manner, the UE's support for the NES capability may be a capability for the UE to perform data communication with a cell based on the cell's NES capability.

For example, the UE may communicate data with the cell based on the transmission (sending/receiving) cycle of the cell.

The first type of UE may determine whether to camp on the cell based on the first indication information. For example, if the first indication information indicates that the cell bars the first type of UE from camping on, the first type of UE does not camp on the cell.

The first indication information is used to indicate whether the cell allows or bars the camping of the first type of UE. On the one hand, indicating whether the UE is allowed to camp on or barred from camping on by category improves the flexibility of indicating whether the UE is allowed to camp on or barred from camping on. On the other hand, when the cell has the NES capability, rejecting the first type of UE from camping reduces the situations where the UE's communication efficiency decreases and power consumption increases when the cell is in the NES mode.

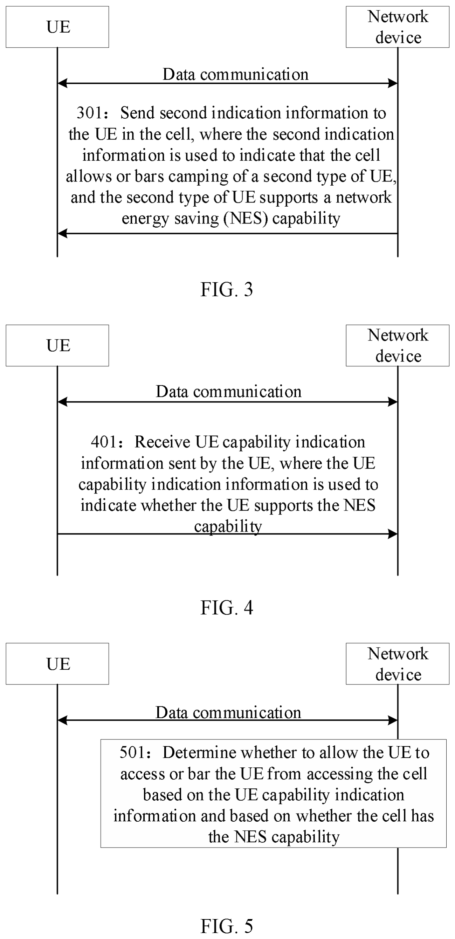

As shown in FIG. 3, an embodiment of the present disclosure provides an information transmission method, which is performed by a network device and includes the following steps.

In step 301, second indication information is sent to the UE in the cell, where the second indication information is used to indicate that the cell allows or bars camping of a second type of UE, and the second type of UE supports a network energy saving (NES) capability.

If there is no contradiction, step 301 may be implemented independently or in combination with step 201 in FIG. 2.

In one possible implementation, the first indication information is used to indicate whether the cell allows or bars the camping of the first type of UE. The first type of UE may determine whether to camp on the cell based solely on the first indication information.

In one possible implementation, the second type of UE may determine whether to camp on the cell based on the first indication information and the second indication information.

The first indication information may be used by the second type of UE for the first-level judgment on whether to camp on, and the second indication information can be used by the second type of UE for the second-level judgment on whether to camp on.

In one possible implementation, when the first indication information and the second indication information simultaneously indicate barring the second type of UE from camping on, the cell is instructed to bar the second type of UE from camping on.

When the first indication information indicates barring the second type UE from camping on, it implicitly indicates that the second type UE needs to further judge the second indication information, and then determine whether the cell allows the second type UE to camp on or bars the second type UE from camping on.

For example, the first indication information may be a "cellBarred" field in the MIB, and the "cellBarred" field may be used to indicate whether the first type of UE is allowed to camp on or barred from camping on. When the second type of UE determines that the "cellBarred" field bars the first type of UE from camping on, the second indication information may be further judged to determine whether the cell allows the second type of UE to camp on or bars the second type of UE from camping on.

By combining the first indication information and the second indication information to indicate whether the cell allows the second type of UE to camp on or bars the second type of UE from camping on, and by using the first indication information to indicate whether the cell allows the first type of UE to camp on or bars the first type of UE from camping on, classified indication of cell camping is achieved, and the flexibility of cell camping indication is improved.

In one embodiment, the first indication information is carried in the MIB;
The second indication information is carried in at least one of the following: the MIB and the SIB1.

The first indication information and the second indication information may be carried in the same signaling or in different signalings.

In one possible implementation, the first indication information and the second indication information may be carried in different fields of the MIB.

For example, the first indication information is carried in the "cellBarred" field of the MIB, and the first indication information is carried in other fields of the MIB, such as a reserved field. The reserved field can be used to indicate whether the second type of UE is allowed to camp on or barred from camping on.

In one possible implementation, the first indication information may be carried in the MIB, and the second indication information may be carried in the SIB1.

In one embodiment, the second indication information, combined with the first indication information, indicating that the cell allows the second type of UE to camp on or bars the second type of UE from camping on, includes at least one of the following:
when the first indication information is a first value and the second indication information is a second value, indicating that the cell bars the second type of UE from camping on;
when the first indication information is the first value and the second indication information is a third value, indicating that the cell allows the second type of UE to camp on;
when the first indication information is a fourth value and the second indication information is any value, indicating that the cell allows the second type of UE to camp on; and
when the first indication information is the fourth value, indicating that the cell allows the second type of UE to camp on.

In one embodiment, in response to the first indication information being the first value, the first indication information indicates that the cell bars the first type of UE from camping on.

Here, the first value is different from the fourth value, and the second value is different from the third value.

Here, the first value may indicate that the cell bars camping of the first type of UE, and the second value may indicate that the cell bars the second type of UE from camping on.

In one possible implementation, if the first indication information is the first value, the second type of UE may further judge the second indication information to determine whether the cell allows or bars the second type of UE from camping on. If the second indication information indicates the second value, it is determined that the cell bars the second type of UE from camping on. If the second indication information indicates the third value, it is determined that the cell allows the second type of UE to camp on. In one possible implementation, if the first indication information is the fourth value, it may indicate that the UE allows all types of UEs to access. The second type of UE may not further determine the second indication information and determine that the cell allows the second type of UE to camp on.

For example, the first indication information may be carried in the "cellBarred" field of the MIB, and the first value may occupy one bit, for example, "1" indicates allowed, and "0" indicates barred (i.e., barred from camping (Barred)).

For a cell with the NES capability, if the "cellBarred" field (first indication information) in the MIB within the cell is set to barred (i.e., the first value), then for the first type of UE (including legacy UEs and UEs that do not support NES capabilities, this cell is "barred" and camping is barred.

For the second type of UE (UEs supporting NES capability), if the UE reads that the setting related to supporting network energy saving (NES) capability in the MIB is set to barred, the UE further checks:
1: The second type of UE may determine the cell camping indication bit (the first indication information) configured in SIB 1, which is dedicated to UEs supporting NES capability. If the indication bit indicates that the cell is "barred" (i.e., the second value), the cell also bars the second type of UE from camping on. Otherwise, the cell allows the second type of UE to camp on.
   or,
2: The second type of UE may also determine a reserved bit (a spare bit) in the MIB (the second indication information), which is used to indicate whether the cell bars the second type of UE from camping on. If the "cellBarred" field (the first indication information) in the MIB is set to barred (i.e., the first value), and the "cellBarred" field (the first indication information) in the MIB is set to 1 (not the second value), it means that the cell allows the second type of UE to camp on, otherwise camping is prohibited (i.e., Barred).

As shown in FIG. 4, an embodiment of the present disclosure provides an information transmission method, which is performed by a network device and includes the following steps.

In step 401, UE capability indication information sent by the UE is received, where the UE capability indication information is used to indicate whether the UE supports the NES capability.

In the absence of any contradiction, step 401 may be implemented alone or in combination with step 201 of FIG. 2 and/or step 301 of FIG. 3.

In one possible implementation, the UE determines that it may send the UE capability indication information to the network device during interaction with the network device.

In one possible implementation, the UE may send the UE capability indication information to the network device during the random access process.

In one possible implementation, the UE may explicitly indicate whether the UE supports the NES capability. That is, the UE capability indication information may occupy one or more bits and use different values to indicate whether the UE supports the NES capability.

For example, the UE capability indication information may occupy one bit, and "1" may be used to indicate that the UE supports the NES capability, and "0" may be used to indicate that the UE does not support the NES capability.

In one possible implementation, the UE may implicitly indicate whether the UE supports the NES capability.

For example, the UE capability indication information may be a predetermined message (such as the Msg1 in a random access process) sent by the UE to the network device, and the transmission resources used to transmit the UE capability indication information may implicitly indicate whether the UE supports the NES capability.

For example, if the UE uses the first transmission resource to send the Msg1, it indicates that the UE supports the NES capability. If the UE uses the second transmission resource to send the Msg1, it indicates that the UE does not support the NES capability. The first transmission resource is different from the second transmission resource.

In one embodiment, the UE capability indication information is carried in at least one of the following: a message 1 (Msg1), a message 3 (Msg3), and a message 5 (Msg5);
The Msg1 may be a preamble in the random access process. The Msg1 may carry the UE capability indication information, or the random access resource used to transmit the Msg1 is used to indicate different UE capability indication information (i.e., whether the UE supports NES capability).

The Msg3 is used by the UE to initiate an RRC connection establishment request to the network device. The Msg3 can carry the UE capability indication information.

The Msg5 may be used to indicate to the network device that the RRC connection establishment is complete. For example, The Msg5 may be an RRCsetupComplete message. The UE may carry the UE capability indication information in Msg5.

For example, the network device may determine that the UE supports the NES capability through at least one of the following.

It is determined that the UE supports the NES capability according to the preamble code of the MSG 1 sent by the UE and/or the RACH resource of the Msg1 being the predetermined resource.

In the TB where the received Msg3 is located, the Logical Channel Identity (LCID) in the Media Access Control (MAC) header corresponding to the MSG3 Session User Data (SUD) is an LCID with a specific value, and this LCID is used to indicate that the UE supports the NES capability.

The spare bit of the received MSG 3 indicates that the UE supports the NES, for example, the spare bit is set to 1.

As shown in in FIG. 5, an embodiment of the present disclosure provides an information transmission method, which is performed by a network device and includes the following steps.

In step 501, it is determined whether to allow the UE to access or bar the UE from accessing the cell based on the UE capability indication information and whether the cell has the NES capability.

In the absence of any contradiction, step 501 may be implemented alone or in combination with step 201 in FIG. 2 and/or step 301 in FIG. 3 and/or step 401 in FIG. 4.

The network device may determine whether to allow or bar the UE access based on whether the cell has the NES capability and whether the UE supports the NES capability.

In one possible implementation, the network device may determine whether to allow or bar the UE access based on a NES capability match between the cell and the UE.

In one possible implementation, if the cell has the NES capability and the UE supports the NES capability, the UE is allowed to access.

In one possible implementation, if the cell does not have the NES capability and the UE supports the NES capability, the UE is allowed to access.

In one embodiment, determining whether to allow or bar access by the UE based on the UE capability indication information and whether the cell has the NES capability includes:
determining that the UE does not support the NES capability and the cell has the NES capability, and barring the UE from accessing the cell.

A cell with the NES capability periodically stops transmission (sending/receiving) at certain intervals. Therefore, in the NES mode, if the UE does not support the NES capability, it will conduct ineffective communication during the periods when the cell stops transmitting, which reduces communication efficiency and increases power consumption. Therefore, the network device may bar the UE from accessing the cell.

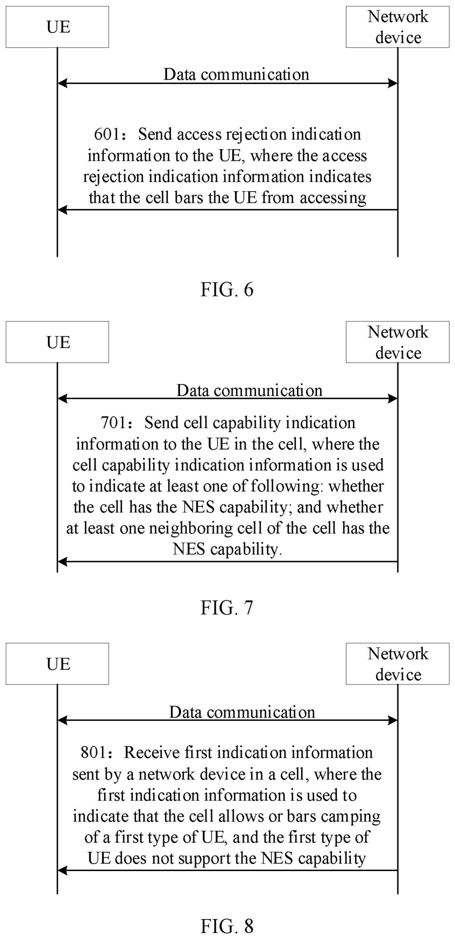

As shown in FIG. 6, an embodiment of the present disclosure provides an information transmission method, which is performed by a network device and includes the following steps.

In step 601, access rejection indication information is sent to the UE, where the access rejection indication information indicates that the cell bars the UE from accessing.

In the absence of contradiction, step 601 may be implemented alone or in combination with step 201 in FIG. 2 and/or step 301 in FIG. 3 and/or step 401 in FIG. 4 and/or step 501 in FIG. 5.

In one possible implementation, the UE is determined not to support the NES capability, that is, the UE is determined to be the first type of UE. The network device determines that the UE is the first type of UE and sends the access rejection indication information to the UE, where the access rejection indication information instructs the cell to bar the UE from accessing.

In one possible implementation, the network device may send the access rejection indication information to the UE in an explicit or implicit manner. For example, the access rejection indication information may be carried by one or more bits to indicate that the cell bars the UE from accessing.

In one embodiment, the access rejection indication information is carried in at least one of the following: an RRC rejection message and an RRC release message.

The RRC rejection message or the RRC release message may implicitly indicate that the indicated cell bars the UE from accessing.

In one possible implementation, the UE indicates through the Msg1 or the Msg3 that the UE does not support the NES capability (i.e., the UE is a first type of UE). If the cell has the NES capability, the network device determines to bar the UE from accessing. The network device may send an RRC rejection message to the UE to instruct the cell to bar the UE from accessing.

In one possible implementation, the UE indicates through the Msg5 that the UE does not support the NES capability (i.e., the UE is a first type of UE). If the cell has the NES capability, the network device determines to bar the UE from accessing. The network device can send an RRC release message to the UE to indicate that the cell bars the UE from accessing.

In one possible implementation, the RRC rejection message or the RRC release message may carry wait time information (waitTime), which is used to indicate the interval duration for the UE to attempt access again.

In one possible implementation, the UE may set a timer (e.g., T302) based on the wait time information, and attempt access again after the timer expires.

In one embodiment, in response to receiving the access rejection indication information, the UE sends third indication information to an upper layer of the UE, where the third indication information is used to indicate at least one of the following:
the cell bars access by all access categories; and
the cell bars access by all access categories except an access category 0 and an access category 2.

The category 0 may be paging. If the cell allows access to category 0, then the UE camps on the cell and can receive paging from the cell.

The category 2 may be an emergency call. If the cell allows access to category 2, then the UE camps on the cell and can make an emergency call in the cell.

As shown in FIG. 7, an embodiment of the present disclosure provides an information transmission method, which is performed by a network device and includes the following steps.

In step 701, cell capability indication information is sent to the UE in the cell, where the cell capability indication information is used to indicate at least one of the following:
whether the cell has the NES capability; and
whether at least one neighboring cell of the cell has the NES capability.

Without contradiction, step 701 may be implemented independently or in combination with step 201 in FIG. 2, step 301 in FIG. 3, step 401 in FIG. 4, step 501 in FIG. 5, and/or step 601 in FIG. 6. In one possible implementation, the network device may broadcast cell capability indication information within the cell, to indicate whether the cell has the NES capability.

In one possible implementation, the network device may broadcast cell capability indication information to the UE within the cell or send it to the UE through a dedicated signaling, to indicate whether the neighboring cell has the NES capability.

In one embodiment, the UE selects a cell to camp on at least based on the cell capability indication information.

In one possible implementation, the UE may determine whether to camp on and/or access a cell based on whether the cell has the NES capability.

For example, the first type of UE may select a cell without the NES capability to camp on.

In one possible implementation, the UE may select a neighboring cell for handover or reselection based on whether the neighboring cell has the NES capability.

For example, the first type of UE may select a neighboring cell without the NES capability for handover. The second type of UE may select a neighboring cell with the NES capability for handover, or may select a neighboring cell with the NES capability for handover.

In one possible implementation, the cell capability indication information may take a frequency band as the granularity to indicate whether at least one neighboring cell in a frequency band has the NES capability. The cell capability indication information may indicate whether neighboring cells in N frequency bands have the NES capability.

In one possible implementation, the cell capability indication information uses a cell identifier to indicate a neighboring cell. The cell identifier includes but is not limited to a physical cell identifier (PCI).

In one embodiment, the frequency band where the cell with the network energy saving (NES) capability is located is a frequency band with a predetermined frequency band camping priority.

In one embodiment, the cell with the network energy saving (NES) capability is a cell with a predetermined cell camping priority.

In one possible implementation, the predetermined frequency band camping priority may be the lowest frequency band camping priority.

In one possible implementation, the predetermined cell camping priority may be the lowest cell camping priority.

In one possible implementation, the frequency band with the predetermined frequency band camping priority may be a frequency band with a lower frequency band camping priority in a plurality of predetermined frequency bands.

In one possible implementation, the cell with the predetermined cell camping priority may be a cell with a lower cell camping priority in a plurality of predetermined cells.

In one possible implementation, since the cells with the NES capability will reduce communication efficiency, and such cells are more likely to be deployed in the same frequency band. Therefore, the UE may preferentially select cells in frequency bands other than the frequency band where the cells with the NES capability are located for camping on.

For example, the UE acquires through the cell's system broadcast that the cell has the NES capability, and the UE may determine that the frequency band where the cell is located has a predetermined frequency band camping priority. The UE may first search for a cell to camp on in the frequency band with a higher frequency band camping priority.

For example, for a UE supporting the NES capability, if the cell where the UE camps does not have the NES capability, the cell may broadcast the NES mode status of neighboring cells (e.g., whether they have NES capability) to the UE through system broadcast. For the frequency band where a neighboring cell with the NES capability is located, the UE considers that this frequency band has a predetermined frequency band camping priority, and the UE may first search for a cell in the frequency band with a higher frequency band camping priority to perform handover.

In one possible implementation, the cell capability indication information may be based on a frequency band as the granularity, indicating whether each cell in a frequency band has the NES capability.

In one possible implementation, since a cell with the NES capability may reduce communication efficiency, the UE may preferentially select a cell other than a cell with the NES capability to camp on.

For example, the UE obtains that the cell has NES capability through the cell system broadcast. The UE may determine that the cell has a predetermined cell camping priority. The UE will only choose to camp on the cell with the NES capability if, and only if, it cannot find any suitable cell other than the cell with the NES capability.

For example, for a UE supporting the NES capability, if the cell in which the UE is camped on does not have the NES capability, the cell may broadcast the NES mode status of neighboring cells (e.g., whether they have the NES capability) to the UE via system broadcast. The UE then considers that the cell with the NES capability has a predetermined cell camping priority. The UE selects the cell with NES capabilities for handover or reselection only if it cannot find any other suitable cell other than the cell with the NES capability.

Through this embodiment, the cell with the NES capability can control the camping or reselection of the first type of UE and/or the second type of UE, for example, allowing and barring camping with NES capability or camping with ultra-low priority, so that the UE does not camp on the cell with the NES capability as much as possible, thereby ensuring the QoS requirements of the UE service.

As shown in FIG. 8, an embodiment of the present disclosure provides an information transmission method, which is performed by a user equipment (UE) and includes the following steps.

In step 801, first indication information sent by a network device in a cell is received, where the first indication information is used to indicate that the cell allows or bars camping of a first type of UE, and the first type of UE does not support the NES capability.

In one possible implementation, the network device may be an access network device or a core network device. Information transmission between the core network device and the UE may be implemented via the access network device.

Here, the first type of UE may include at least one of the following:
a UE defined in earlier versions prior to the 3GPP standard release 18 (R18), or referred to as a traditional UE;
a UE that does not support the NES capability, for example, the UE in R18 version that does not support the network energy saving (NES) capability.

In a possible implementation, sending the first indication information to the user equipment (UE) in the cell may include:
determining that the cell has the NES capability, and sending the first indication information barring a first type of UE from camping to the UE.

In a possible implementation, the first indication information may be a "cellBarred" field in the MIB, and the "cellBarred" field may be used to indicate whether the first type of UE is allowed to camp on or barred from camping on.

In the cell with the NES capability, the cell periodically stops transmitting (generating/receiving) at certain intervals. Therefore, in NES mode, on the one hand, the cell can achieve energy-saving, and on the other hand, it will affect the communication efficiency of UEs. The first type of UEs, as they do not support NES capability, will conduct invalid communication during the periods when the cell stops transmission, thereby reducing communication efficiency and increasing power consumption.

In one possible implementation, the NES capability of a cell may include at least one of the following: a reduced synchronization signal block secondary cell (SSB-less SCell) capability; a cell discontinuous transmission/reception (cell DTX/DRX) capability; an antenna port adaptation capability; and a physical downlink shared channel transmission power adaptation capability.

In a possible implementation manner, the UE's support for the NES capability may be a capability for the UE to perform data communication with a cell based on the cell's NES capability.

For example, the UE may communicate data with the cell based on the transmission (sending/receiving) cycle of the cell.

The first type of UE may determine whether to camp on the cell based on the first indication information. For example, if the first indication information indicates that the cell bars the first type of UE from camping on, the first type of UE will not camp on the cell.

The first indication information is used to indicate whether the cell allows or bars the camping of the first type of UE. On the one hand, indicating whether the UE is allowed to camp on or barred from camping on by category improves the flexibility of indicating whether the UE is allowed to camp on or barred from camping on. On the other hand, when the cell has the NES capability, rejecting the first type of UE from camping reduces the situations where the UE's communication efficiency decreases and power consumption increases when the cell is in the NES mode.

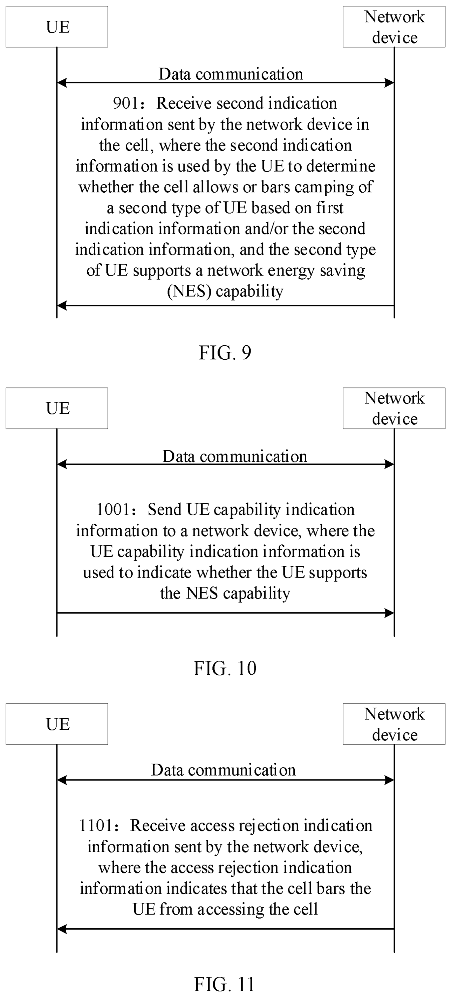

As shown in FIG. 9, an embodiment of the present disclosure provides an information transmission method, which is performed by a user equipment (UE) and includes the following steps.

In step 901, second indication information sent by the network device in the cell is received, where the second indication information is used by the UE to determine whether the cell allows or bars camping of a second type of UE based on first indication information and/or the second indication information, and the second type of UE supports a network energy saving (NES) capability.

If there is no contradiction, step 901 may be implemented independently or in combination with step 801 of FIG. 8.

In one possible implementation, the first indication information is used to indicate whether the cell allows or bars the camping of the first type of UE. The first type of UE may determine whether to camp on the cell based solely on the first indication information.

In one possible implementation, the second type of UE may determine whether to camp on the cell based on the first indication information and the second indication information.

The first indication information may be used by the second type of UE for the first-level judgment on whether to camp on, and the second indication information can be used by the second type of UE for the second-level judgment on whether to camp on.

In one possible implementation, when the first indication information and the second indication information simultaneously indicate barring the second type of UE from camping on t, the cell is instructed to bar the second type of UE from camping on.

When the first indication information indicates barring the second type UE from camping on, it implicitly indicates that the second type UE needs to further judge the second indication information, and then determine whether the cell allows the second type UE to camp on or bars the second type UE from camping on.

For example, the first indication information may be a "cellBarred" field in the MIB, and the "cellBarred" field may be used to indicate whether the first type of UE is allowed to camp on or barred from camping on. When the second type of UE determines that the "cellBarred" field bars the first type of UE from camping on, the second indication information may be further judged to determine whether the cell allows the second type of UE to camp on or bars the second type of UE from camping on.

By combining the first indication information and the second indication information to indicate whether the cell allows the second type of UE to camp on or bars the second type of UE from camping on, and by using the first indication information to indicate whether the cell allows the first type of UE to camp on or bars the first type of UE from camping on, classified indication of cell camping is achieved, and the flexibility of cell camping indication is improved.

In one embodiment, the first indication information is carried in the MIB;
The second indication information is carried in at least one of the following: the MIB and the SIB1.

The first indication information and the second indication information may be carried in the same signaling or in different signalings.

In one possible implementation, the first indication information and the second indication information may be carried in different fields of the MIB.

For example, the first indication information is carried in the "cellBarred" field of the MIB, and the first indication information is carried in other fields of the MIB, such as a reserved field. The reserved field can be used to indicate whether the second type of UE is allowed to camp on or barred from camping on.

In one possible implementation, the first indication information may be carried in the MIB, and the second indication information may be carried in the SIB1.

In one embodiment, the second indication information being used by the UE to determine whether the cell allows or bars the second type of UE from camping based on the first indication information and the second indication information, includes at least one of the following:
when the first indication information is a first value and the second indication information is a second value, determining that the cell bars second type of UE from camping on;
when the first indication information is a first value and the second indication information is a third value, determining that the cell allows the second type of UE to camp on; and
when the first indication information is a fourth value and the second indication information is any value, determining that the cell allows the second type of UE to camp on.

In one embodiment, when the first indication information is the fourth value, the first indication information indicates that the cell allows the second type of UE to camp on.

In one embodiment, in response to the first indication information being the first value, the first indication information indicates that the cell bars the first type of UE from camping on.

Here, the first value is different from the fourth value, and the second value is different from the third value.

Here, the first value may indicate that the cell bars camping of the first type of UE on the cell, and the second value may indicate that the cell bars the second type of UE from camping on the cell.

In one possible implementation, if the first indication information is the first value, the second type of UE may further judge the second indication information to determine whether the cell allows or bars the second type of UE from camping on. If the second indication information indicates the second value, it is determined that the cell bars the second type of UE from camping on. If the second indication information indicates the third value, it is determined that the cell allows the second type of UE to camp on.

In one possible implementation, if the first indication information is the fourth value, it may indicate that the UE allows all types of UEs to access. The second type of UE may not further determine the second indication information and determine that the cell allows the second type of UE to camp on.

For example, the first indication information may be carried in the "cellBarred" field of the MIB, and the first value may occupy one bit, for example, "1" indicates allowed, and "0" indicates barred (i.e., barred from camping (Barred)).

For a cell with the NES capability, if the "cellBarred" field (first indication information) in the MIB within the cell is set to barred (i.e., the first value), then for the first type of UE (including legacy UEs and UEs that do not support NES capabilities, this cell is "barred" and camping is barred.

For the second type of UE (UEs supporting NES capability), if the UE reads that the setting related to supporting network energy saving (NES) capability in the MIB is set to barred, the UE further checks:
1: The second type of UE may determine the cell camping indication bit (the first indication information) configured in SIB 1, which is dedicated to UEs supporting NES capability. If the indication bit indicates that the cell is "barred" (i.e., the second value), the cell also bars the second type of UE from camping on. Otherwise, the cell allows the second type of UE to camp on.
   or,
2: The second type of UE may also determine a reserved bit (a spare bit) in the MIB (the second indication information), which is used to indicate whether the cell bars the second type of UE from camping on. If the "cellBarred" field (the first indication information) in the MIB is set to barred (i.e., the first value), and the "cellBarred" field (the first indication information) in the MIB is set to 1 (not the second value), it means that the cell allows the second type of UE to camp on, otherwise camping is prohibited (i.e., Barred).

As shown in FIG. 10, an embodiment of the present disclosure provides an information transmission method, which is performed by a UE and includes the following steps.

In step 1001: UE capability indication information is sent to a network device, where the UE capability indication information is used to indicate whether the UE supports the NES capability.

In the absence of any contradiction, step 1001 may be implemented alone or in combination with step 801 of FIG. 8 and/or step 901 of FIG. 9.

In one possible implementation, the UE determines that it may send UE capability indication information to the network device during interaction with the network device.

In one possible implementation, the UE may send the UE capability indication information to the network device during the random access process.

In one possible implementation, the UE may explicitly indicate whether the UE supports the NES capability. That is, the UE capability indication information may occupy one or more bits and use different values to indicate whether the UE supports the NES capability.

For example, the UE capability indication information may occupy one bit, and "1" may be used to indicate that the UE supports the NES capability, and "0" may be used to indicate that the UE does not support the NES capability.

In one possible implementation, the UE may implicitly indicate whether the UE supports the NES capability.

For example, the UE capability indication information may be a predetermined message (such as the Msg1 in a random access process) sent by the UE to the network device, and the transmission resources used to transmit the UE capability indication information may implicitly indicate whether the UE supports the NES capability.

For example, if the UE uses the first transmission resource to send the Msg1, it indicates that the UE supports the NES capability. If the UE uses the second transmission resource to send the Msg1, it indicates that the UE does not support the NES capability. The first transmission resource is different from the second transmission resource.

In one embodiment, the UE capability indication information is carried in at least one of the following: a message 1 (Msg1), a message 3 (Msg3), and a message 5 (Msg5);
The Msg1 may be a preamble in the random access process. The Msg1 may carry the UE capability indication information, or the random access resource used to transmit the Msg1 is used to indicate different UE capability indication information (i.e., whether the UE supports NES capability).

The Msg3 is used by the UE to initiate an RRC connection establishment request to the network device. The Msg3 can carry the UE capability indication information.

The Msg5 may be used to indicate to the network device that the RRC connection establishment is complete. For example, The Msg5 may be an RRCsetupComplete message. The UE may carry the UE capability indication information in Msg5.

For example, the network device may determine that the UE supports the NES capability through at least one of the following.

It is determined that the UE supports the NES capability according to the preamble code of the MSG 1 sent by the UE and/or the RACH resource of the Msg1 being the predetermined resource.

In the TB where the received Msg3 is located, the Logical Channel Identity (LCID) in the Media Access Control (MAC) header corresponding to the MSG3 Session User Data (SUD) is an LCID with a specific value, and this LCID is used to indicate that the UE supports the NES capability.

The spare bit of the received MSG 3 indicates that the UE supports the NES, for example, the spare bit is set to 1.

In one embodiment, the UE capability indication information is used by the network device to determine whether to allow or bar the UE from accessing the cell in combination with whether the cell has the NES capability.

The network device may determine whether to allow or bar the UE access based on whether the cell has the NES capability and whether the UE supports the NES capability.

In one possible implementation, the network device may determine whether to allow or bar UE access based on a NES capability match between the cell and the UE.

In one possible implementation, if the cell has NES capability and the UE supports NES capability, the UE is allowed to access.

In one possible implementation, if the cell does not have NES capability and the UE supports NES capability, the UE is allowed to access.

In one embodiment, the network device determines that the UE does not support the NES capability and the cell has the NES capability, and bars the UE from accessing the cell.

A cell with the NES capability periodically stops transmission (sending/receiving) at certain intervals. Therefore, in the NES mode, if the UE does not support the NES capability, it will conduct ineffective communication during the periods when the cell stops transmitting, which reduces communication efficiency and increases power consumption. Therefore, the network device may bar the UE from accessing the cell.

As shown in FIG. 11, an embodiment of the present disclosure provides an information transmission method, which is performed by a UE and includes the following steps.

In step 1101, access rejection indication information sent by the network device is received, where the access rejection indication information indicates that the cell bars the UE from accessing the cell.

In the absence of any contradiction, step 1101 may be implemented alone or in combination with step 801 in FIG. 8 and/or step 901 in FIG. 9 and/or step 1001 in FIG. 10.

In one possible implementation, the UE is determined not to support the NES capability, that is, the UE is determined to be the first type of UE. The network device determines that the UE is the first type of UE and sends the access rejection indication information to the UE, where the access rejection indication information instructs the cell to bar the UE from accessing.

In one possible implementation, the network device may send access rejection indication information to the UE in an explicit or implicit manner.

For example, the access rejection indication information may be carried by one or more bits to indicate that the cell bars the UE from accessing.

In one embodiment, the access rejection indication information is carried in at least one of the following: an RRC rejection message and an RRC release message.

The RRC rejection message or the RRC release message may implicitly indicate that the indicated cell bars the UE from accessing.

In one possible implementation, the UE indicates through the Msg1 or the Msg3 that the UE does not support the NES capability (i.e., the UE is a first type of UE). If the cell has the NES capability, the network device determines to bar the UE from accessing. The network device may send an RRC rejection message to the UE to instruct the cell to bar the UE from accessing.

In one possible implementation, the UE indicates through the Msg5 that the UE does not support the NES capability (i.e., the UE is a first type of UE). If the cell has the NES capability, the network device determines to bar the UE from accessing. The network device can send an RRC release message to the UE to indicate that the cell bars the UE from accessing.

In one possible implementation, the RRC rejection message or the RRC release message may carry wait time information (waitTime), which is used to indicate the interval duration for the UE to attempt access again.

In one possible implementation, the UE may set a timer (e.g., T302) based on the wait time information, and attempt access again after the timer expires.

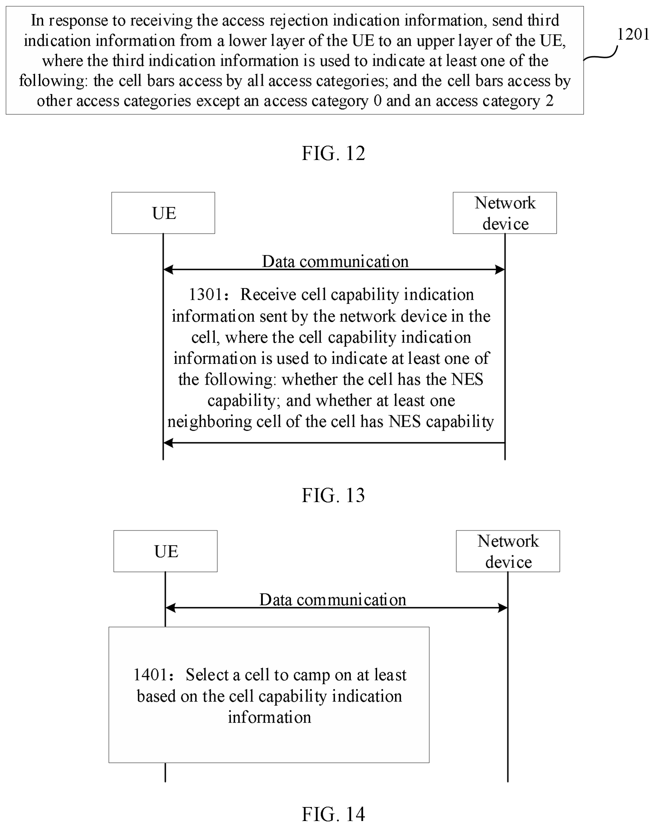

As shown in FIG. 12, an embodiment of the present disclosure provides an information transmission method, which is performed by a UE and includes the following steps.

In step 1201, in response to receiving the access rejection indication information, third indication information is sent from a lower layer of the UE to an upper layer of the UE, where the third indication information is used to indicate at least one of the following:
the cell bars access by all access categories; and
the cell bars access by other access categories except an access category 0 and an access category 2.

In the absence of contradiction, step 1201 may be implemented alone or in combination with step 801 in FIG. 8 and/or step 901 in FIG. 9 and/or step 1001 in FIG. 10 and/or step 1101 in FIG. 11.

Access rejection indication information.

In one possible implementation, the lower layer of the UE includes a media access control (MAC) layer of the UE.

The category 0 may be paging. If the cell allows access to category 0, then the UE camps on the cell and can receive paging from the cell.

The category 2 may be an emergency call. If the cell allows access to category 2, then the UE camps on the cell and can make an emergency call in the cell.

As shown in FIG. 13, an embodiment of the present disclosure provides an information transmission method, which is performed by a UE and includes the following steps.

In step 1301, cell capability indication information sent by the network device in the cell is received, where the cell capability indication information is used to indicate at least one of the following:
whether the cell has the NES capability; and
at least one neighboring cell of the cell has NES capability.

Without contradiction, step 1301 may be implemented alone or in combination with step 801 in FIG. 8 and/or step 901 in FIG. 9 and/or step 1001 in FIG. 10 and/or step 1101 in FIG. 11 and/or step 1201 in FIG. 12.

In one possible implementation, the network device may broadcast cell capability indication information within the cell, indicating whether the cell has NES capability.

In one possible implementation, the network device may broadcast cell capability indication information to the UE within the cell or send it to the UE through a dedicated signaling, indicating whether the neighboring cell has the NES capability.

As shown in FIG. 14, an embodiment of the present disclosure provides an information transmission method, which is performed by a UE and includes the following steps.

In step 1401, a cell is selected to camp on at least based on the cell capability indication information.

Without contradiction, step 1401 may be implemented alone or in combination with step 801 of FIG. 8 and/or step 901 of FIG. 9 and/or step 1001 of FIG. 10 and/or step 1101 of FIG. 11 and/or step 1201 of FIG. 12 and/or step 1301 of FIG. 13.

In one possible implementation, the UE may determine whether to camp on and/or access a cell based on whether the cell has the NES capability.

For example, the first type of UE may select a cell without the NES capability to camp on.

In one possible implementation, the UE may select a neighboring cell for handover or reselection based on whether the neighboring cell has the NES capability.

For example, the first type of UE may select a neighboring cell without the NES capability for handover. The second type of UE may select a neighboring cell with the NES capability for handover, or may select a neighboring cell with the NES capability for handover.

In one possible implementation, the cell capability indication information may take a frequency band as the granularity to indicate whether at least one neighboring cell in a frequency band has the NES capability. The cell capability indication information may indicate whether neighboring cells in N frequency bands have the NES capability.

In one possible implementation, the cell capability indication information uses a cell identifier to indicate a neighboring cell. The cell identifier includes but is not limited to a physical cell identifier (PCI).

In one embodiment, selecting the cell to camp on at least based on the cell capability indication information includes:
selecting the cell to camp on based on at least one of the following:
a frequency band camping priority of the frequency band where the cell is located; and
a cell camping priority of the cell;
where the cell having the NES capability is located in a frequency band with a predetermined frequency band camping priority, and the cell having the NES capability is a cell with a predetermined cell camping priority.

In one possible implementation, the predetermined frequency band camping priority may be the lowest frequency band camping priority.

In one possible implementation, the predetermined cell camping priority may be the lowest cell camping priority.

In one possible implementation, the frequency band with the predetermined frequency band camping priority may be a frequency band with a lower frequency band camping priority in a plurality of predetermined frequency bands.

In one possible implementation, the cell with the predetermined cell camping priority may be a cell with a lower cell camping priority in a plurality of predetermined cells.

In one possible implementation, since the cells with the NES capability will reduce communication efficiency, and such cells are more likely to be deployed in the same frequency band. Therefore, the UE may preferentially select cells in frequency bands other than the frequency band where the cells with the NES capability are located for camping on.

For example, the UE acquires through the cell's system broadcast that the cell has the NES capability, and the UE may determine that the frequency band where the cell is located has a predetermined frequency band camping priority. The UE may first search for a cell to camp on in the frequency band with a higher frequency band camping priority.

For example, for a UE supporting the NES capability, if the cell where the UE camps does not have the NES capability, the cell may broadcast the NES mode status of neighboring cells (e.g., whether they have NES capability) to the UE through system broadcast. For the frequency band where a neighboring cell with the NES capability is located, the UE considers that this frequency band has a predetermined frequency band camping priority, and the UE may first search for a cell in the frequency band with a higher frequency band camping priority to perform handover.

In one possible implementation, the cell capability indication information may be based on a frequency band as the granularity, indicating whether each cell in a frequency band has the NES capability.

In one possible implementation, since a cell with NES capability may reduce communication efficiency, the UE may preferentially select a cell other than a cell with NES capability to camp on.

For example, the UE obtains that the cell has NES capability through the cell system broadcast. The UE may determine that the cell has a predetermined cell camping priority. The UE will only choose to camp on the cell with the NES capability if, and only if, it cannot find any suitable cell other than the cell with the NES capability.

For example, for a UE supporting the NES capability, if the cell in which the UE is camped on does not have the NES capability, the cell may broadcast the NES mode status of neighboring cells (e.g., whether they have the NES capability) to the UE via system broadcast. The UE then considers that the cell with the NES capability has a predetermined cell camping priority. The UE selects the cell with NES capabilities for handover or reselection only if it cannot find any other suitable cell other than the cell with the NES capability.

Through this embodiment, the cell with the NES capability can control the camping or reselection of the first type of UE and/or the second type of UE, for example, allowing and barring camping with NES capability or camping with ultra-low priority, so that the UE does not camp on the cell with the NES capability as much as possible, thereby ensuring the QoS requirements of the UE service.

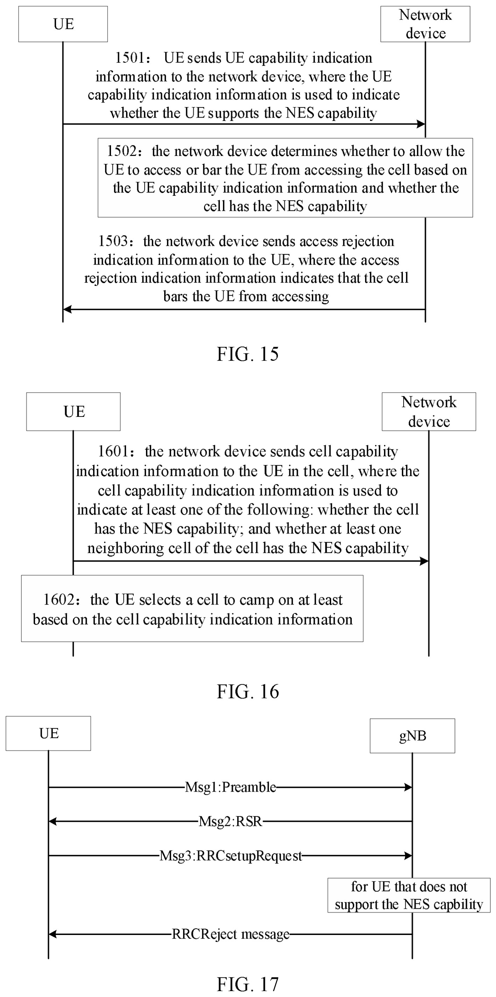

As shown in FIG. 15, an embodiment of the present disclosure provides an information transmission method, including the following steps.

In step 1501: the UE sends UE capability indication information to a network device, where the UE capability indication information is used to indicate whether the UE supports the NES capability.

In one possible implementation, the UE may send the UE capability indication information to the network device during a random access process.

In one possible implementation, the UE indicates to the network device whether the UE supports the NES capability by one of the following:
the UE sends an uplink signaling in resources reserved for UEs supporting NES capabilities, indicating that the UE supports the NES capability; and
the UE carries UE capability indication information in the reserved bits of the uplink signaling, indicating that the UE supports the NES capability.

In one possible implementation manner, the network device may determine whether the UE supports the NES capability based on the UE capability indication information sent by the UE.

The optional implementation of step 1501 can refer to the optional implementation of step 401 in FIG. 4 and/or step 1001 in FIG. 10, and other related parts in the embodiments involved, which will not be repeated here.

In step 1502, the network device determines whether to allow the UE to access or bar the UE from accessing the cell based on the UE capability indication information and whether the cell has the NES capability.

In one possible implementation, step 1502 may include one of the following:
the network device determines that the UE does not support the NES capability and the cell has the NES capability, and bars the UE from accessing the cell; and
the network device determines that the UE supports the NES capability and the cell has the NES capability, and allows the UE to access the cell.

A cell with the NES capability periodically stops transmission (sending/receiving) at certain intervals. Therefore, in the NES mode, if the UE does not support the NES capability, it will conduct ineffective communication during the periods when the cell stops transmitting, which reduces communication efficiency and increases power consumption. Therefore, the network device may bar the UE from accessing the cell.

The optional implementation of step 1502 can refer to the optional implementation of step 501 in FIG. 5 and other related parts in the embodiments involved, which will not be repeated here.

In step 1503, the network device sends access rejection indication information to the UE, where the access rejection indication information indicates that the cell bars the UE from accessing.

In one possible implementation, the access indication information may include an RRC rejection message or an RRC release message, etc.

In one possible implementation, after receiving the access indication information, the UE may retry access based on a waiting time (waitTime).

In one possible implementation, after the UE receives the access rejection indication information, the lower layer of the UE can report third indication information to the upper layer of the UE, and the third indication information is used to indicate at least one of the following: the cell bars access of all access categories; the cell bars access of all access categories except an access category 0 and an access category 2.

The optional implementation of step 1503 can refer to the optional implementation of step 601 in FIG. 6 and/or step 1101 in FIG. 11, and other related parts in the embodiments involved, which will not be repeated here.

As shown in FIG. 16, an embodiment of the present disclosure provides an information transmission method, including the following steps.

In step 1601, the network device sends cell capability indication information to the UE in the cell, where the cell capability indication information is used to indicate at least one of the following: whether the cell has the NES capability; and whether at least one neighboring cell of the cell has the NES capability.

In one possible implementation, the network device may send the cell capability indication information to the UE by broadcasting or dedicated signaling.

The optional implementation of step 1601 can refer to the optional implementation of step 701 in FIG. 7 and/or step 1301 in FIG. 13, and other related parts in the embodiments involved, which will not be repeated here.

In step 1602, the UE selects a cell to camp on at least based on the cell capability indication information.

In one possible implementation, step 1602 includes: the UE selects a cell to reside in based on at least one of the following: a frequency band camping priority of the frequency band where the cell is located; and a cell camping priority of the cell; where, the frequency band where the cell with the NES capability is located is a frequency band with a predetermined frequency band camping priority, and the cell with the NES capability is a cell with a predetermined cell camping priority.

In one possible implementation, the predetermined frequency band camping priority may be the lowest frequency band camping priority.

In one possible implementation, the predetermined cell camping priority may be the lowest cell camping priority.

In one possible implementation, the frequency band with the predetermined frequency band camping priority may be a frequency band with a lower frequency band camping priority in a plurality of predetermined frequency bands.

In one possible implementation, the cell with the predetermined cell camping priority may be a cell with a lower cell camping priority in a plurality of predetermined cells.

A cell with the NES capability periodically stops transmission (sending/receiving) at certain intervals. Therefore, in the NES mode, if the UE does not support the NES capability, it will conduct ineffective communication during the periods when the cell stops transmitting, which reduces communication efficiency and increases power consumption. Therefore, the network device may bar the UE from accessing the cell.

Therefore, when selecting a cell to camp on, the UE may prioritize camping on a cell in a frequency band other than the frequency band of the cell with the NES capability, and/or prioritize camping on a cell that does not have the NES capability.

The optional implementation of step 1602 can refer to the optional implementation of step 1401 in FIG. 14 and other related parts in the embodiments involved, which will not be repeated here.

With reference to any of the above embodiments, a number of specific examples are provided below.

### Example 1:

For UEs that do not support the NES capability and legacy UEs (i.e., first type of UEs), they are required to be barred.

The MIB code is as follows:

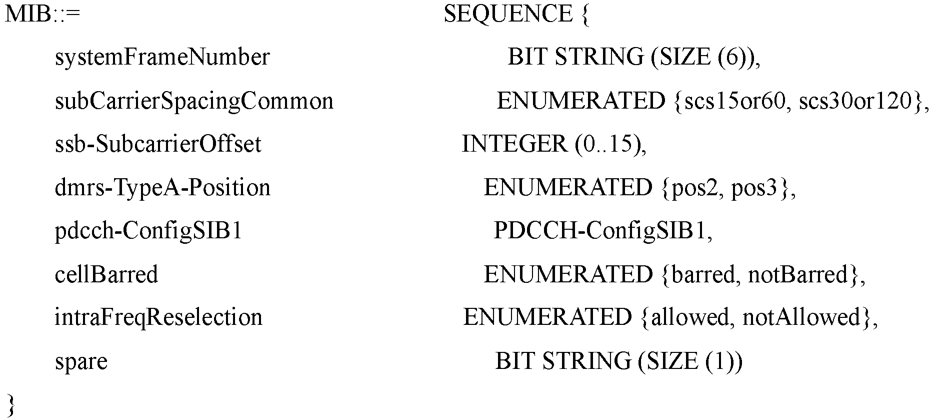

For the cell with the NES capability, the "cellBarred" field in the MIB is set to "barred". For UEs that do not support the NES capability and legacy UEs (first type of UEs), this cell is barred and is barred from camping on it.

For UEs supporting the NES capability (second type of UEs), if the "cellBarred" field in the MIB read by the UE is set to "barred", the UE performs further checks in one of the following modes.

Mode 1: A cell barring indicator bit is configured in SIB1, specific for a UE supporting the NES capability. If this indication bit indicates that the cell is "barred", the cell is also barred for the UE supporting the NES capability; otherwise, the cell is not barred for the UE supporting the NES capability.

Mode 2: A spare bit in the MIB is used to indicate whether the cell is barred for a UE supporting the NES capability. If the "cellBarred" field in the MIB is set to "barred" and the spare bit in the MIB is set to 1, it indicates that the cell is not barred for the UE supporting the NES capability; otherwise, the cell is barred.

### Example 2:

For a UE supporting the NES capability, it performs camping on a cell with NES capability with ultra-low priority.

Here, "camping on a cell with NES capability with ultra-low priority" can mean that the cell with NES capability has the lowest camping priority.

Mode 1: For a UE supporting the NES capability, if this UE is camping on a cell with NES capability, the UE obtains, via system broadcast, that this cell is a cell with NES capability. The UE then regards the frequency layer (frequency band) where this cell is located as the lowest priority (predefined frequency band camping priority), and simultaneously executes a search for a higher priority cell to camp on. The UE only selects to camp on the cell with NES capability if and only if it cannot find any other suitable cell apart from cells with NES capability.

Mode 2: For a UE supporting the NES capability, if this UE is camping on a neighbor cell of a cell with NES capability, and this neighbor cell does not have the NES capability, then the system broadcast of this neighbor cell broadcasts the NES mode status of the neighbor cell of the UE's serving cell to the UE. The UE then regards the frequency layer (frequency band) where the NES-capable neighbor cell is located as the lowest priority (predefined frequency band camping priority). The UE only selects to camp on the cell with NES capability if and only if it cannot find any other suitable cell apart from cells with NES capability.

### Example 3:

For UEs that support the NES capability, the UE capability is indicated. The network rejects UEs that do not support the NES capability and legacy UEs (first type of UEs).

As shown in FIG. 17, the UE indicates through the MSG 1 or the MSG 3 that the UE supports NES.

Mode 1: The network device receives the preamble code of MSG1 and/or the RACH resources that are reserved to indicate that the UE supports the NES capability.

Mode 2: The Logical Channel Identity (LCID) in the Media Access Control (MAC) header, corresponding to the Session User Data (SUD) in the MSG3 carried within the Transport Block (TB) of the received MSG3, has a specific value. This LCID is used to indicate that the UE supports the NES capability.

Mode 3: A spare bit received in MSG3 indicates that the UE supports NES, for example, where the spare bit is set to 1.

For a UE that does not support the NES capability or a legacy UE (first type of UE), the network device sends an RRCReject message carrying a wait time (waitTime).

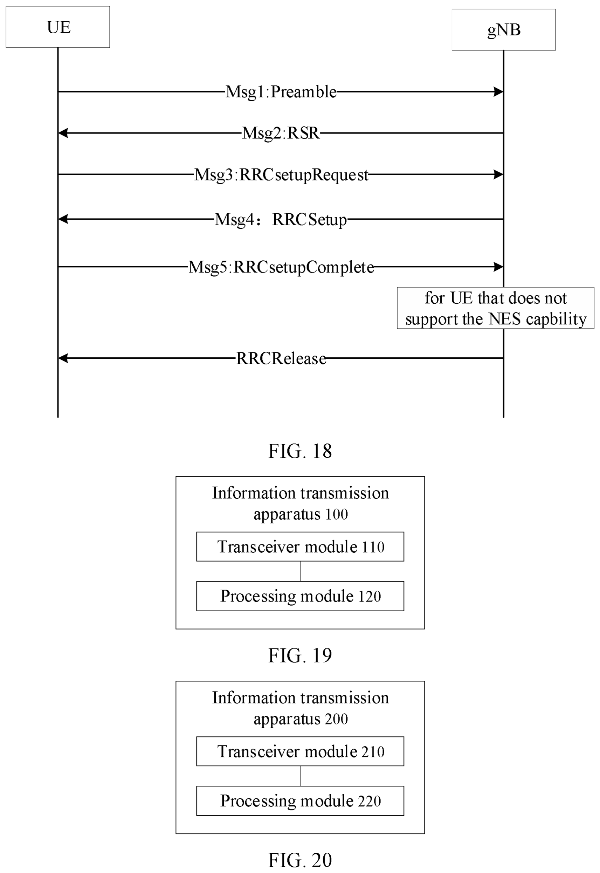

As shown in FIG. 18, the UE indicates through the MSG 1 or the MSG 5 that the UE supports NES.

For UEs that do not support the NES capability or legacy UEs (first type of UEs), the network device sends an RRCRelease message carrying a wait time (waitTime).

Upon receiving an RRC Reject message or an RRC Release message, the UE starts timer T302 based on the received the waitTime. And one of the following actions may be performed.
1: Notify the upper layer that this access barring applies to all access categories, that is, for all "access categories ".
2: Notify the upper layer that this access barring applies to all access categories except a category 0 (cat 0) and a category 2 (cat 2).

As shown in FIG. 19, an embodiment of the present disclosure provides an information transmission apparatus 100, which is provided in a network device and includes:
a transceiver module 110, configured to send first indication information to a user equipment (UE) in a cell, where the first indication information is used to indicate that the cell allows or bars camping of a first type of UE, and the first type of UE does not support a network energy saving (NES) capability.

In one embodiment, the transceiver module is further configured to:
send second indication information to the UE in the cell, where the second indication information is used to indicate that the cell allows or bars camping of a second type of UE, and the second type of UE supports the network energy saving (NES) capability.

In one embodiment, the first indication information is carried in a master information block (MIB).

The second indication information is carried in at least one of the following: the MIB and a system information block 1 (SIB1).

In one embodiment, the transceiver module is further configured to:
receive UE capability indication information sent by the UE, where the UE capability indication information is used to indicate whether the UE supports the NES capability.

In one embodiment, the apparatus further comprises:
a processing module 120, configured to determine whether to allow or bar access by the UE based on the UE capability indication information and whether the cell has the NES capability.

In one embodiment, determining whether to allow or bar the access by the UE based on the UE capability indication information and whether the cell has the NES capability includes:
determining that the UE does not support the NES capability and the cell has the NES capability, and barring the UE from accessing the cell.

In one embodiment, the transceiver module is further configured to:
send access rejection indication information to the UE, where the access rejection indication information instructs the cell to bar the UE from accessing.

In one embodiment, the UE capability indication information is carried in at least one of the following: a message 1 (Msg1), a message 3 (Msg3), and a message 5 (Msg5).

The access rejection indication information is carried in at least one of the following: an RRC rejection message and an RRC release message.

In one embodiment, a cell with the network energy saving (NES) capability is located in a frequency band with a predetermined frequency band camping priority.

In one embodiment, the cell with the network energy saving (NES) capability is a cell with a predetermined cell camping priority.

In one embodiment, the transceiver module is further configured to:
send cell capability indication information to the UE in the cell, where the cell capability indication information is used to indicate at least one of the following:
whether the cell has the NES capability; and
whether at least one neighboring cell of the cell has NES capability.

As shown in FIG. 20, an embodiment of the present disclosure provides an information transmission apparatus 200, which is provided in a user equipment (UE) and includes:
a transceiver module 210, configured to receive first indication information sent by a network device in a cell, where the first indication information is used to indicate that the cell allows or bars camping of a first type of UE, and the first type of UE does not support a network energy saving (NES) capability.

In one embodiment, the transceiver module is further configured to:
receive second indication information sent by the network device in the cell, where the second indication information is used by the UE to determine whether the cell allows or bars camping of a second type of UE based on the first indication information and/or the second indication information, and the second type of UE supports network energy saving (NES) capability.

In one embodiment, the second indication information is used by the UE to determine whether the cell allows or bars the camping of the second type of UE based on the first indication information and the second indication information, includes at least one of the following:
when the first indication information is a first value and the second indication information is a second value, determining that the cell bars the second type of UE from camping on;
when the first indication information is the first value and the second indication information is a third value, determining that the cell allows the second type of UE to camp on; and
when the first indication information is a fourth value and the second indication information is any value, determining that the cell allows the second type of UE to camp on.

In one embodiment, when the first indication information is the fourth value, the first indication information indicates that the cell allows the second type of UE to camp on.

In one embodiment, when the first indication information is a first value, the first indication information indicates that the cell bars the first type of UE from camping on.

In one embodiment, the first indication information is carried in a master information block (MIB); and/or,
the second indication information is carried in at least one of the following: the MIB and a system information block 1 (SIB1).

In one embodiment, the transceiver module is further configured to:
send UE capability indication information to the network device, where the UE capability indication information is used to indicate whether the UE supports the NES capability.

In one embodiment, the UE capability indication information is used by the network device to determine whether to allow or bar the UE from accessing the cell in combination with whether the cell has the NES capability.

In one embodiment, the transceiver module is further configured to:
receive access rejection indication information sent by the network device, where the access rejection indication information instructs the cell to bar the UE from accessing.

In one embodiment, the UE capability indication information is carried in at least one of the following: a message 1 (Msg1), a message 3 (Msg3), and a message 5 (Msg5).

The access rejection indication information is carried in at least one of the following: an RRC rejection message and an RRC release message.

In one embodiment, the transceiver module is further configured to:
in response to receiving the access rejection indication information, send third indication information from a lower layer of the UE to an upper layer of the UE, where the third indication information is used to indicate at least one of the following:
the cell bars access by all access categories; and
the cell bars access by other access categories except an access category 0 and an access category 2.

In one embodiment, the transceiver module is further configured to:
receive cell capability indication information sent by the network device in the cell, where the cell capability indication information is used to indicate at least one of the following:
whether the cell has the NES capability; and
whether at least one neighboring cell of the cell has the NES capability.

In one embodiment, the apparatus further comprises:
a processing module 220, configured to select a cell to camp on at least according to the cell capability indication information.

In one embodiment, the processing module is specifically configured to:
select the cell to camp on based on at least one of the following:
a frequency band camping priority of the frequency band where the cell is located; and
a cell camping priority of the cell;
where the cell with the NES capability is located in a frequency band with a predetermined frequency band camping priority, and the cell with the NES capability is a cell with a predetermined cell camping priority.

An embodiment of the present disclosure provides a communication device, including:
a processor; and
a memory for storing processor-executable instructions;
where the processor is configured to implement the information transmission method of any embodiment of the present disclosure when running the executable instructions.

In one embodiment, the communication device may include, but is not limited to, at least one of: a network control relay and a network device. The network device may include a core network or an access network device. The access network device may include an access network device; the core network may include an AMF and an SMF.

The processor may include various types of storage media, which are non-temporary computer storage media that can continue to store information after the user device loses power.

The processor may be connected to the memory via a bus or the like, and may be configured to read an executable program stored in the memory, for example, at least one of the methods shown in FIG. 2 to FIG. 20.

The present disclosure also provides a computer storage medium storing a computer executable program, which, when executed by a processor, implements the information transmission method of any embodiment of the present disclosure, such as at least one of the methods shown in FIGS. 2 to 20.

Regarding the device or storage medium in the above embodiments, the specific manner in which each module performs operations has been described in detail in the embodiments of the method and will not be elaborated here.

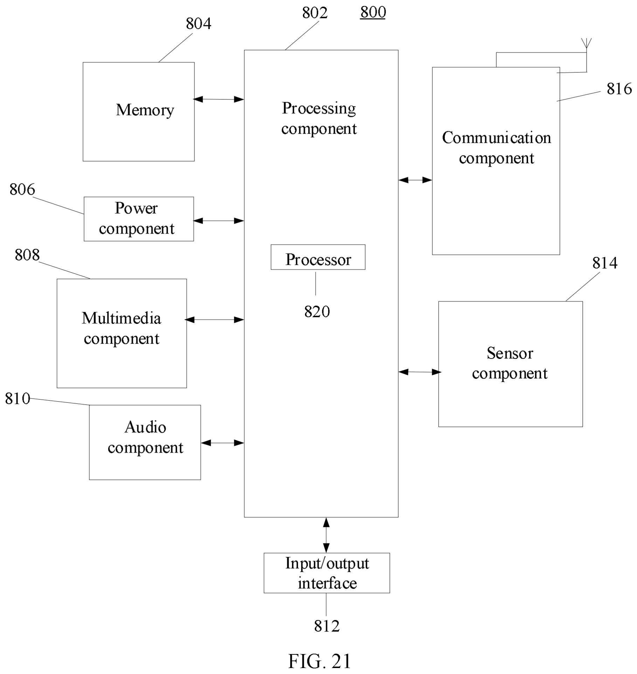

FIG. 21 is a block diagram of a UE 800 shown according to an exemplary embodiment. For example, the UE 800 may be a mobile phone, a computer, a digital broadcast terminal, a messaging device, a gaming console, a tablet, a medical device, an exercise equipment, a personal digital assistant, and the like.

Referring to FIG. 21, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to generate all or part of the steps in the above-described methods. Moreover, the processing component 802 may include one or more modules which facilitate the interaction between the processing component 802 and other components. For instance, the processing component 802 may include a multimedia module to facilitate the interaction between the multimedia component 3008 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the device 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 804, executable by the processor 820 in the UE 800, for generating the above-described methods. For example, the non-transitory computer-readable storage medium may be a ROM, a random access memory (RAM), a CD-ROM, a magnetic tape, a floppy disc, an optical data storage device, and the like.

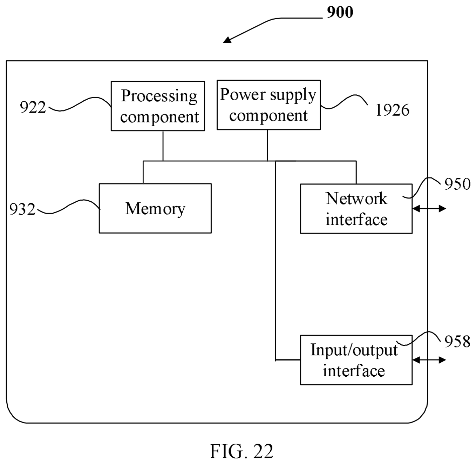

As shown in FIG. 22, an embodiment of the present disclosure shows a structure of an access device. For example, the communication device 900 may be provided as a network device. The communication device may be various network elements such as the aforementioned access network element and/or network function.

Referring to FIG. 22, the communication device 900 includes a processing component 922, which further includes one or more processors, and a memory resource represented by a memory 932 for storing instructions executable by the processing component 922, such as an application program. The application program stored in the memory 932 may include one or more modules, each corresponding to a set of instructions. In addition, the processing component 922 is configured to execute instructions to perform any of the above methods applied to the access device, such as the method shown in any of FIG. 2 to FIG. 16.

The communication device 900 may further include a power component 926 configured to perform power management of the communication device 900, a wired or wireless network interface 950 configured to connect the network device 900 to a network, and an input/output (I/O) interface 958. The communication device 900 may operate based on an operating system stored in the memory 932, such as a Windows Server^{™}, a Mac OS X^{™}, a Unix^{™}, a Linux^{™}, a Free BSD^{™} or the like.

In the absence of contradiction, each step in the above-mentioned embodiment or example can be implemented as an independent embodiment, and the steps can be arbitrarily combined. For example, a solution after removing some steps in a certain embodiment or example can also be implemented as an independent embodiment, and the order of the steps in a certain embodiment or example can be arbitrarily exchanged. In addition, the optional modes or optional examples in a certain embodiment or example can be arbitrarily combined; in addition, the embodiments or examples can be arbitrarily combined. For example, some or all steps of different embodiments or examples can be arbitrarily combined, and a certain embodiment or example can be arbitrarily combined with the optional modes or optional examples of other embodiments or examples.

Other embodiments of the present disclosure will be apparent to those skilled in the art from consideration of the specification and practice of the contents disclosed here. The present disclosure is intended to cover any variations, uses, or adaptations of the present disclosure, which follows the general principles thereof and includes the common knowledge or habitual technical means in this technical field that is not disclosed in the present disclosure. The specification and embodiments are considered as exemplary only, with a true scope and spirit of the present disclosure being indicated by the appending claims.

It will be appreciated that the present disclosure is not limited to the exact construction that has been described above and illustrated in the accompanying drawings, and various modifications and changes can be made without departing from the scope thereof. The scope of the present disclosure is only limited by the appended claims.

## Claims

1. An information transmission method, performed by a network device, comprising:
sending first indication information to a user equipment (UE) in a cell, wherein the first indication information is used to indicate that the cell allows or bars camping of a first type of UE, and the first type of UE does not support a network energy saving (NES) capability.

2. The method according to claim 1, further comprising:
sending second indication information to the UE in the cell, wherein the second indication information is used to indicate that the cell allows or bars camping of a second type of UE, and the second type of UE supports the network energy saving (NES) capability.

3. The method according to claim 1 or 2, wherein,
the first indication information is carried in a master information block (MIB); and
the second indication information is carried in at least one of following: the MIB and a system information block (SIB1).

4. The method according to any one of claims 1 to 3, further comprising:
receiving UE capability indication information sent by the UE, wherein the UE capability indication information is used to indicate whether the UE supports the NES capability.

5. The method according to claim 4, further comprising:
determining whether to allow the UE to access or bar the UE from accessing the cell based on the UE capability indication information and based on whether the cell has the NES capability.

6. The method according to claim 5, wherein determining whether to allow the UE to access or bar the UE from accessing based on the UE capability indication information and whether the cell has the NES capability comprises:
determining that the UE does not support the NES capability and the cell has the NES capability, and barring the UE from accessing the cell.

7. The method according to claim 6, further comprising:
sending access rejection indication information to the UE, wherein the access rejection indication information indicates that the cell bars the UE from accessing.

8. The method according to claim 7, wherein,
the UE capability indication information is carried in at least one of following: a message 1 (Msg1), a message 3 (Msg3), and a message 5 (Msg5); and
the access rejection indication information is carried in at least one of following: an RRC rejection message and an RRC release message.

9. The method according to any one of claims 1 to 8, wherein,
a cell having the network energy saving (NES) capability is located in a frequency band with a predetermined frequency band camping priority.

10. The method according to any one of claims 1 to 9, wherein,
a cell having the network energy saving (NES) capability is a cell with a predetermined cell camping priority.

11. The method according to any one of claims 1 to 10, further comprising:
sending cell capability indication information to the UE in the cell, wherein the cell capability indication information is used to indicate at least one of following:
whether the cell has the NES capability; and
whether at least one neighboring cell of the cell has the NES capability.

12. An information transmission method, performed by a user equipment (UE), comprising:
receiving first indication information sent by a network device in a cell, wherein the first indication information is used to indicate that the cell allows or bars camping of a first type of UE, and the first type of UE does not support a network energy saving (NES) capability.

13. The method according to claim 12, further comprising:
receiving second indication information sent by the network device in the cell, wherein the second indication information is used by the UE to determine whether the cell allows or bars camping of a second type of UE based on the first indication information and/or the second indication information, and the second type of UE supports the network energy saving (NES) capability.

14. The method according to claim 13, wherein the second indication information being used by the UE to determine whether the cell allows or bars the camping of the second type of UE based on the first indication information and the second indication information, comprises at least one of following:
in response to that the first indication information is a first value and the second indication information is a second value, determining that the cell bars the camping of the second type of UE;
in response to that the first indication information is the first value and the second indication information is a third value, determining that the cell allows the camping of the second type of UE; and
in response to that the first indication information is a fourth value and the second indication information is any value, determining that the cell allows the camping of the second type of UE.

15. The method according to any one of claims 13 to 14, wherein,
in response to that the first indication information is a fourth value, the first indication information indicates that the cell allows the camping of the second type of UE.

16. The method according to any one of claims 12 to 14, wherein,
in response to that the first indication information is a first value, the first indication information indicates that the cell bars the camping of the first type of UE.

17. The method according to any one of claims 13 to 16, wherein,
the first indication information is carried in a master information block (MIB); and/or,
the second indication information is carried in at least one of following: the MIB and a system information block (SIB1).

18. The method according to any one of claims 12 to 17, further comprising:
sending UE capability indication information to the network device, wherein the UE capability indication information is used to indicate whether the UE supports the NES capability.

19. The method according to claim 18, wherein,
the UE capability indication information is used by the network device to determine whether to allow the UE to access or bar the UE from accessing the cell in combination with whether the cell has the NES capability.

20. The method according to claim 19, further comprising:
receiving access rejection indication information sent by the network device, wherein the access rejection indication information indicates that the cell bars the UE from accessing.

21. The method according to claim 20, wherein,
the UE capability indication information is carried in at least one of following: a message 1 (Msg1), a message 3 (Msg3), and a message 5 (Msg5); and
the access rejection indication information is carried in at least one of following: an RRC rejection message and an RRC release message.

22. The method according to claim 20 or 21, further comprising:
in response to receiving the access rejection indication information, sending third indication information from a lower layer of the UE to an upper layer of the UE, wherein the third indication information is used to indicate at least one of following:
the cell bars access by all access categories; and
the cell bars access by other access categories except an access category 0 and an access category 2.

23. The method according to any one of claims 12 to 22, further comprising:
receiving cell capability indication information sent by the network device in the cell, wherein the cell capability indication information is used to indicate at least one of following:
whether the cell has the NES capability; and
whether at least one neighboring cell of the cell has the NES capability.

24. The method according to claim 23, further comprising:
selecting a cell to camp on at least based on the cell capability indication information.

25. The method according to claim 24, wherein selecting the cell to camp on at least based on the cell capability indication information comprises:
selecting the cell to camp on based on at least one of following:
a frequency band camping priority of the frequency band where the cell is located; and
a cell camping priority of the cell;
wherein the cell having the NES capability is located in a frequency band with a predetermined frequency band camping priority, and the cell having the NES capability is a cell with a predetermined cell camping priority.

26. An information transmission apparatus, provided in a network device, comprising:
a transceiver module, configured to send first indication information to a user equipment (UE) in a cell, wherein the first indication information is used to indicate that the cell allows or bars camping of a first type of UE, and the first type of UE does not support a network energy saving (NES) capability.

27. An information transmission device, provided in a user equipment (UE), comprising:
a transceiver module, configured to receive first indication information sent by a network device in a cell, wherein the first indication information is used to indicate that the cell allows or bars camping of a first type of UE, and the first type of UE does not support a network energy saving (NES) capability.

28. A communication system, comprising a network device and a user equipment (UE), wherein,
the network device executes the information transmission method provided by any one of claims 1 to 13; and
the UE executes the information transmission method provided by any one of claims 14 to 25.

29. A communication device, comprising a processor, a transceiver, a memory, and an executable program stored in the memory and capable of being run by the processor, wherein the processor, when running the executable program, executes the information transmission method provided in any one of claims 1 to 11 or 12 to 25.

30. A computer storage medium, wherein the computer storage medium stores an executable program, and the executable program, when being executed by a processor, implements the information transmission method provided in any one of claims 1 to 11 or 12 to 25.
